# EUROPEAN PATENT SPECIFICATION

(11) **EP 1 208 324 B1**
(45) Date of publication and mention of the grant of the patent: **08.03.2006**
(21) Application number: 00956539.1
(22) Date of filing: 24.08.2000
(51) Int. Cl.: F16L 59/00

(54) **INSULATION MATERIAL AND METHOD FOR MANUFACTURING THE INSULATION**
ISOLATIONSMATERIAL UND VERFAHREN ZUR HERSTELLUNG DER ISOLIERUNG
MATERIAU ISOLANT ET PROCEDE DE FABRICATION DE L'ISOLATION

(30) Priority: 30.08.1999 FI 991831
(43) Date of publication of application: 29.05.2002
(73) Proprietor: UPM-Kymmene Corporation, 00130 Helsinki (FI)
(72) Inventor: PEURAMÄKI, Juhani, FIN-37640 Valkeakoski (FI)
(74) Representative: HOFFMANN EITLE
(86) International application number: PCT/FI2000/000716
(87) International publication number: WO 2001/016521

(56) References cited:
- EP-A- 0 067 060
- DE-A- 2 112 751
- DE-A1- 2 946 855
- DE-A1- 3 725 866
- DE-A1- 19 525 861
- DE-A1- 19 547 672
- DE-A1- 19 705 511

## Description

### Background art

DE-A-2 112 751 discloses a coating for an insulation layer comprising a metal layer and a plastic layer. The layers are heated to crystallise the plastic.
The invention relates to building materials and applies to a coating for insulation material. The coating includes metal, such as aluminium. The invention also applies to the manufacture of the coating, and its use in insulation materials. The invention is suitable for use, for instance, in insulation materials that include expanded plastics or fibre wool.

Building technology uses different insulation materials, in which a coating has been joined to a porous insulation layer. The coating can be used to improve the insulating properties, durability, fire safety, dimensional stability, or the appearance of the material.

Aluminium foil is often used in the coatings of insulation materials. It is impermeable to gas and incombustible, and reflects thermal radiation. The aluminium sheet is joined to the insulation layer by means of a plastic adhesion layer. The insulation material is manufactured in the following manner: firstly, the adhesion layer is joined to the aluminium sheet, after which the laminate that has thus been produced is joined to the insulation layer. This can be done, for instance, onto polyurethane while it is still in a reactive state, whereby the layers self-adhere without separate gluing. When there is a gas-tight aluminium layer against the layer of expanded plastic, the propellants in the expanded plastic remain inside it to an optimal degree.

One problem here is, however, the coating's insufficient strength in the manufacture of the insulation material. The aluminium sheet tears easily when it is pulled into the machine. For example, when coating polyurethane insulation that is still forming, the resulting malfunction causes extremely great disadvantage, as the swelling polyurethane foam spreads and stains production machinery and premises. In fact, the primary function of the coating in such a situation is to protect the process machinery from reactive and sticky insulation material in the initial phase of the process.

EP 0 067 060 discloses a surface-treated metal plate and a method for producing it. A plastic resin is extruded on the surface of the metal plate. The surface of the metal plate is preheated in order to increase the fluidity of the resin.

### General disclosure of the invention

The present invention concerns a coating for insulation material as claimed in claim 7. Its characteristic feature is that it comprises a metal layer, such as an aluminium layer, to which is joined a plastic layer containing a plastic that crystallized when heated. The plastic is such that it is joined to the metal film by extrusion. The plastic contains a polyamide, such as polyamide-6 or polyamide-66. The heat at which: the plastic is crystallized is 100-160°C. There may be an adhesion layer between the metal layer and the plastic layer.

The invention also concerns a method for producing insulation material coating which method is defined in claim 1, and in which method a coating for the insulation material as claimed in claim 7 is manufactured by extrusion.

In the method, the coating is joined to an insulation layer, and the plastic layer is heated so that the plastic crystallises. The insulation layer may more particularly be an expanded plastic, such as polyurethane or polystyrene. Ih this case, the coating can be joined to the insulation layer while the insulation layer is being formed. When the forming of the insulation layer is exothermal, the heat that is generated can be used in crystallising the plastic of the plastic layer.

During the process of manufacturing the insulation material the plastic layer protects the coating, especially from tearing. While crystallising, the plastic layer becomes rigid, and thus the insulation material gains solidity and surface strength.

The invention particularly concerns insulation material, which material is manufactured by using coating in as claimed in claim 1, in which the plastic layer includes a polyamide that crystallises when heated.

### Detailed description of the invention

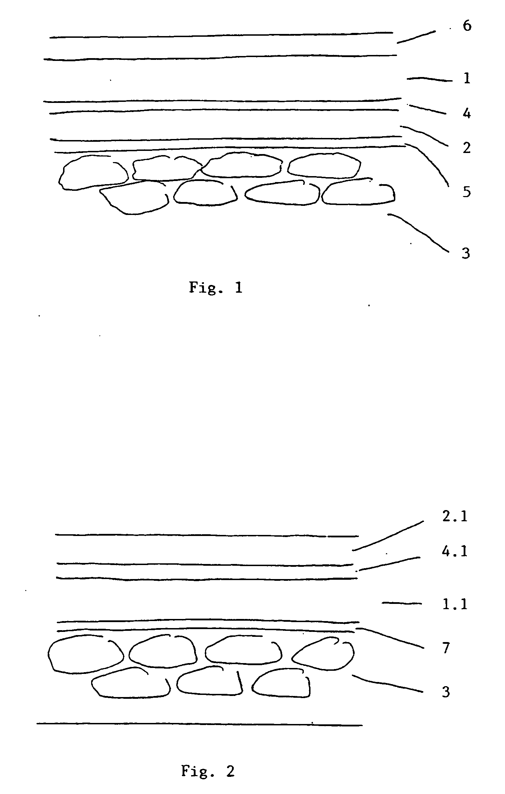

In an embodiment as shown in figure 1, a layer 2 (e.g. approx. 30 g/m2), including a polyamide-6 that crystallises when heated, has been joined to an aluminium layer (e.g. approx. 50 µm). The coating thus obtained has been joined to the foamed polyurethane layer 3 in such a way that the polyamide layer remains between them, and the polyamide layer has been heated in order to crystallise the polyamide.

In order to improve adhesion between the aluminium layer 1 and the polyamide layer 2, there is an adhesion layer 4 between them containing a suitable adhesive plastic. Correspondingly, in order to improve the adhesion between the polyamide layer and the polyurethane layer 3, there is an adhesion layer 5 between them. Furthermore, the outer surface of the aluminium layer is coated with a surface layer 6 (e.g. HD-polyethylene). The surface layer may include necessary additives, more particularly a fire retardant.

A product according to figure 1 can be manufactured more particularly in such a way that an adhesion layer 4, a polyamide layer 2, an adhesion layer 5 and a surface layer 6 are joined to aluminium sheet 1 by extruding in several phases. The extrusion is carried out in such a way that the polyamide does not yet substantially crystallise. The coating 1 thus formed is joined to an expanded polyurethane layer 3 while it is being formed. The forming reaction of polyurethane is exothermal, whereby the coating also heats up. During the manufacturing process, the polyamide layer is allowed to heat up to the crystallisation heat of polyamide (e.g. 120-140°C. such as 125-135°C, typically approx. 130°C), whereupon the polyamide crystallises. The necessary crystallisation time may, for instance, be 1-5 minutes. When choosing the polyamide, its extrusion properties are taken into consideration.

By using the coextrusion technique, the number of manufacturing phases can be reduced.

The polyamide in polyamide layer 2 is flexible and glutinous when uncrystallised. Thus, the coating is easy to run on the machine, and it withstands the process well without tearing. When it crystallises, the polyamide layer strengthens and stiffens, thereby producing an insulation material that is sufficiently strong and stiff. The crystallised polyamide also increases bursting resistance.

In the embodiment shown in figure 2, there is an aluminium layer 1.1, on top of which a polyamide-6 layer 2.1 has been joined. The coating thus formed has been joined to polyurethane layer 3.1 in such a way that the aluminium layer1.1 remains between them.

In order to enhance the adhesion of aluminium layer 1.1 and polyamide layer 2.1, there is an adhesion layer 4.1 between them. The adhesion layer may contain pigment, more particularly white pigment. Correspondingly, in order to increase adhesion between aluminium layer 1.1 and expanded polyurethane layer 3, there is a lacquer layer 7 (e.g. approx. 2 µm) between them.

Insulation material according to figure 2 can be manufactured similarly to the material according to figure 1, described above. The coating can be formed by coextruding in two phases, more particularly in such a way that, firstly, a polyamide layer 2.1 and an adhesion layer 4.1 are joined to each other, and then joined to an aluminium layer 1.1 and an adhesion layer 7.

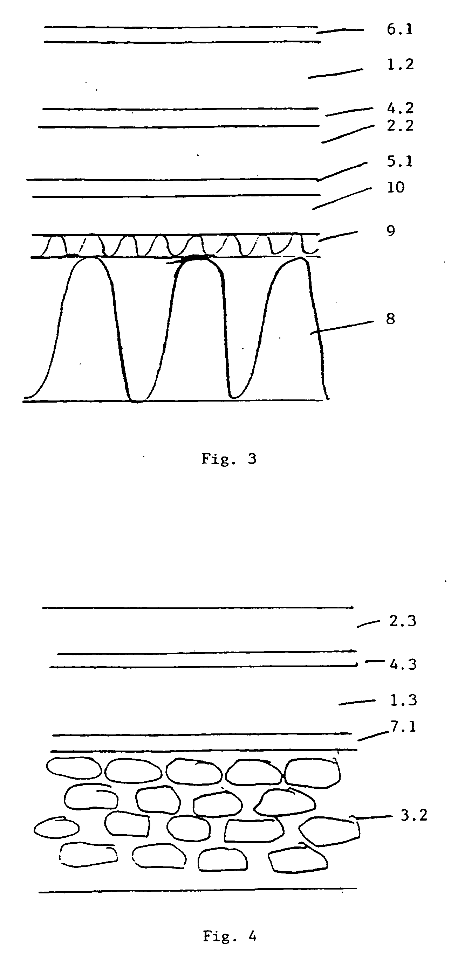

In the embodiment shown in figure 3, there is a layer of fibre wool 8 (e.g. mineral wool approx. 50 mm), on top of it a layer of non-woven mat 9 (e.g. glass fibre mat approx. 50 g/m2), a plastic layer 10 (e.g. polyethylene approx. 40 g/m2), an adhesion layer 5.1 (e.g. approx. 2 µm), a polyamide layer 2.2 (e.g. approx. 30 µm), an adhesion layer 4.2 (e.g. approx. 2 µm), a layer of aluminium foil 1.2 (e.g. approx. 50 µm), and a lacquer layer 6.1 (e.g. approx. 3 µm). During manufacture, heat is passed from above through the entire layer. Melting occurs at a temperature of, for example, 140-160°C, typically at approximately 150°C.

In addition, figure 4 presents a product corresponding to figure 2, in which the insulation is a layer of polystyrene foam (EPS) 3.2. On top of it, there is a layer of hot seal lacquer 7.1 (e.g. approx. 2 µm), a layer of aluminium foil 1.3, an adhesion layer 4.3 (e.g, approx. 2 µm), and a polyamide layer 2.3 (e.g. approx. 30 µm). In manufacturing, heat is applied from above. The polystyrene foam 3.2 melts and adheres to the hot seal lacquer 7.1.

Insulation materials according to the invention can be manufactured so that they meet the fire regulation norms.

## Claims

1. A method for manufacturing a coating for insulation material, in which method a plastic layer (2; 2.1; 2.2; 2.3) comprising a polyamide is extruded on a surface of a metal layer (1; 1.1; 1.2; 1.3) in such a manner that the plastic layer and the metal layer are joined together,
**characterized in that**
after joining the metal layer and the plastic layer together the coating is heated at a temperature which is between 100 and 160°C in such a manner that the polyamide becomes crystallized.

2. A method for manufacturing insulation material, in which method a coating according to claim 1 is joined to an insulation layer such as a layer containing expanded plastic or fibre wool, wherein the insulation material is joined to the coating prior to the plastic layer of the coating being crystallised.

3. A method as claimed in claim 2, in which the polyamide is polyamide-66 or polyamide-6, particularly polyamide-6.

4. A method as claimed in claims 2 or 3, in which method the insulation layer contains an expanded plastic, such as expanded polyurethane or expanded polystyrene, and in which the coating is joined to the layer of expanded plastic during the formation of the expanded plastic.

5. A method as claimed in claim 4, in which during the formation of the expanded plastic, heat is generated, with the help of which the plastic in the plastic layer of the coating is crystallised.

6. An insulation material comprising an insulation layer (3; 3.1; 3.2; 8, 9), and a coating joined to it, the coating including a metal layer such as an aluminium layer (1; 1.1; 1.2; 1.3), and a plastic layer (2; 2.1; 2.2; 2.3) joined to the metal layer,
**characterized in that**:
the plastic layer is an extruded layer comprising crystallised polyamide.

7. An insulation material as claimed in claim 6, in which a polyamide-containing plastic layer (2; 2.2) is placed against the insulation layer (3; 8, 9).

8. An insulation material as claimed in claim 6 or 7, in which an adhesive layer is included between the coating and the insulation layer (5; 10; 5.1; 7; 7.1).

## Patentansprüche

1. Verfahren zur Erzeugung einer Beschichtung für ein Isolationsmaterial, wobei eine Kunststoffschicht (2; 2.1; 2.2; 2.3), die ein Polyamid umfasst, auf einer Oberfläche einer Metallschicht (1; 1.1; 1.2; 1.3) auf eine solche Weise extrudiert wird, dass die Kunststoffschicht und die Metallschicht miteinander verbunden werden,
**dadurch gekennzeichnet, dass**
nach dem Verbinden der Metallschicht und der Kunststoffschicht die Beschichtung auf eine solche Weise auf eine Temperatur zwischen 100 und 160°C erhitzt wird, dass das Polyamid kristallisiert wird.

2. Verfahren zur Erzeugung eines Isolationsmaterials, wobei eine Beschichtung gemäß Anspruch 1 mit einer Isolationsschicht so wie einer Schicht, die expandierten Kunststoff oder Faserwolle enthält, verbunden wird, wobei das Isolationsmaterial mit der Beschichtung vor der Kristallisation der Kunststoffschicht der Beschichtung verbunden wird.

3. Verfahren wie in Anspruch 2, wobei das Polyamid Polyamid-66 oder Polyamid-6, insbesondere Polyamid-6 ist.

4. Verfahren wie in den Ansprüchen 2 oder 3, wobei die Isolationsschicht einen expandierten Kunststoff so wie expandiertes Polyurethan oder expandiertes Polystyren enthält und wobei die Beschichtung mit der Schicht aus expandiertem Kunststoff während der Bildung des expandierten Kunststoffs verbunden wird.

5. Verfahren wie in Anspruch 4, wobei während der Bildung des expandierten Kunststoffs Wärme erzeugt wird, mit deren Hilfe der Kunststoff in der Kunststoffschicht der Beschichtung kristallisiert wird.

6. Isolationsmaterial, umfassend eine Isolationsschicht (3; 3.1; 3.2; 8, 9) und eine damit verbundene Beschichtung, wobei die Beschichtung eine Metallschicht so wie eine Aluminiumschicht (1; 1.1; 1.2; 1.3) und eine Kunststoffschicht (2; 2.1; 2.2; 2.3), die mit der Metallschicht verbunden ist, beinhaltet,
**dadurch gekennzeichnet, dass**
die Kunststoffschicht eine extrudierte Schicht, die kristallisiertes Polyamid umfasst, ist.

7. Isolationsmaterial wie in Anspruch 6, bei dem eine Polyamid enthaltende Kunststoffschicht (2; 2.2) gegen die Isolationsschicht (3; 8, 9) platziert ist.

8. Isolationsmaterial wie in Anspruch 6 oder 7, bei dem eine Haftschicht zwischen der Beschichtung und der Isolationsschicht (5; 10; 5.1; 7; 7.1) eingeschlossen ist.

## Revendications

1. Procédé pour la fabrication d'un revêtement pour un matériau isolant, dans lequel procédé une couche de plastique (2; 2.1..2.2 ; 2.3) comprenant un polyamide est extrudée sur une surface d'une couche métallique (1 ; 1.1 ; 1.2 ; 1.3) de manière telle que la couche de plastique et la couche métallique sont jointes ensembles,
**caractérisé en ce que**,
après jonction de la couche métallique et de la couche de plastique ensemble, le revêtement est chauffé à une température qui est située entre 100 et 160°C de manière telle que le polyamide devient cristallisé.

2. Procédé pour fabriquer un matériau isolant, dans lequel procédé un revêtement selon la revendication 1 est joint à une couche isolante telle qu'une couche contenant du plastique expansé ou de la fibre de laine, dans lequel le matériau isolant est joint au revêtement avant que la couche de plastique de revêtement ne soit cristallisée.

3. Procédé selon la revendication 2, dans lequel le polyamide est le polyamide-66 ou le polyamide-6, particulièrement le polyamide-6.

4. Procédé selon la revendication 2 ou 3, dans lequel procédé la couche isolante comprend un plastique expansé, tel que du polyuréthanne expansé ou du polystyrène expansé et dans lequel le revêtement est joint à la couche du plastique expansé pendant la formation du plastique expansé.

5. Procédé selon la revendication 4, dans lequel pendant la formation du plastique expansé, de la chaleur est générée, à l'aide de laquelle le plastique dans la couche de plastique du revêtement est cristallisé.

6. Matériau isolant comprenant une couche isolante (3 ; 3.1 ; 3.2 ; 8, 9) et un revêtement joint à celle-ci, le revêtement incluant une couche métallique telle qu'une couche d'aluminium (1 ; 1.1 ; 1.2 ; 1.3) et une couche de plastique (2 ; 2.1 ; 2.2 ; 2.3) jointe à la couche métallique,
**caractérisé en ce que** :
la couche de plastique est une couche extrudée comprenant du polyamide cristallisé.

7. Matériau isolant selon la revendication 6, dans lequel la couche contenant du polyamide (2 ; 2.2) est placée contre la couche isolante (3 ; 8, 9).

8. Matériau isolant selon la revendication 6 ou 7, dans lequel une couche adhésive est incluse entre le revêtement et la couche isolante (5 ; 10 ; 5.1 ; 7 ; 7.1).
